Europäisches Patentamt

(19) European Patent Office

Office européen des brevets

(11) Publication number: **0 104 155**
**A1**

(12) **EUROPEAN PATENT APPLICATION**

(21) Application number: **83850236.7**

(22) Date of filing: **05.09.83**

(51) Int. Cl.³: **B 60 P 7/08**

(30) Priority: **09.09.82 SE 8205121**

(43) Date of publication of application:
**28.03.84 Bulletin 84/13**

(84) Designated Contracting States:
**AT BE CH DE FR GB IT LI NL**

(71) Applicant: **Industri AB Thule**
**Box 69**
**S-330 33 Hillerstorp(SE)**

(72) Inventor: **Thulin, Willis**
**Vallgatan 18**
**S-330 33 Hillerstorp(SE)**

(74) Representative: **Linde, Leif**
**Vernamo Patentbyrä AB P.O. Box 1**
**S-270 11 Abbekas(SE)**

(54) **A strap tensioning device.**

(57) A strap tensioning device which comprises a rotatably mounted strap roller (4) about which a strap (30) is adapted to run.

To make tensioning of the strap possible without winding the strap onto the strap roller, the strap tensioning device comprises a second rotatably mounted clamping roller (6) against which the strap roller (4) is arranged to be urged to clamp the strap between the rollers. Blocking of at least one roller (4 and 6) against rotation with the aid of a latching means (24) produces a fixation of the strap.

*Fig.3.*

This invention relates to a strap tensioning device of the kind comprising a rotatably mounted strap roller about which the strap is intended to run.

Load carriers of the type adapted to be clamped to the drip mouldings of vehicle roofs with a view to carrying different kinds of bulky objects thereon, have found an ever increasing employment. The load carriers may be for instance luggage carriers, ski racks, surfboard racks, canoe racks, etc. To prevent or at least make it more difficult to steal such objects carried by the load carriers as are retained by means of straps and the like, it is necessary to connect the strap ends to the load carrier with the aid of some kind of locking device and, moreover, to design the strap in such a way that it cannot be severed or cut off by means of conventional scissors or knives. To realize this it is previously known to manufacture a strap for securing objects to a load carrier for vehicles from an elastomeric material with a plurality of wires of reinforcing material, such as metal, embedded therein. Suitably, each of the wires of reinforcing material consists of a plurality of twisted-together metal wires.

However, the described design of the strap gives rise to difficulties when the strap is tensioned for securing objects to the load carrier since the strap because of the reinforcing material embedded therein is not so flexible as to permit being conventionally wound onto a conventional type strap roller.

The present invention therefore has for its purpose to provide a strap tensioning device which is suited for use in tensioning a strap which is relatively stiff because it is provided with a reinforcement.

To realize this purpose the strap tensioning device according to the invention comprises, in addition to a rotatably mounted strap roller about which the strap is adapted to run over at least part of the periphery of the roller, a second rotatably mounted clamping roller against which the strap roller is arranged to be urged in order to clamp the strap between the rollers, and at least one of the rollers is adapted to be blocked against rotation for fixation of the strap.

In a preferred embodiment of the invention, the strap roller is mounted so as to be movable towards and away from the clamping roller in a direction making an angle with a plane extending through the axes of rotation of the rollers, and so that a pull at the strap brings about said urging of the strap roller against the clamping roller.

It is also preferred that a tensioning arm is associated with one of the rollers to rotate that roller for tensioning of the strap, and that a latching device is associated with one of the rollers for fixation of that roller in the tensioned position of the strap, said latching device being releaseable by means of the tensioning arm.

Besides, the two rollers are suitably interconnected by means of gear or tooth wheels.

The invention will now be described more in detail below with reference to the accompanying drawings, in which:

Figs. 1 and 2 show a section and side view, respectively, of a strap tensioning device according to the invention in its closed position; and

Fig. 3 shows a section, corresponding to Fig. 1, of the strap tensioning device according to Figs. 1 and 2 in its open position.

A strap tensioning device according to the invention comprises a housing 2 in which a strap roller 4 and a clamping roller 6 are rotatably mounted, each on an axis of rotation 8 and 10, respectively. The axis 8 is mounted in slots 12 in the housing 12 so that the strap roller 4 is movable in a direction making an angle of about 60⁰ with a plane extending through the axes 8 and 10. The strap roller 4 is thus movable obliquely towards and away from the clamping roller 6.

A tensioning arm 14 is arranged on the same axis 10 as the clamping roller 6 and can thus pivot about said axis 10. The tensioning arm 14 has a pawl 18 which is rockably mounted on a pin 16 and loaded with a spring 20. The pawl 18 is adapted to engage a tooth wheel 20 which is fixedly connected with the clamping roller 6 and the teeth 22 of which are adapted also to engage a pawl 24 which is mounted on a pin 26 and loaded with a spring 28.

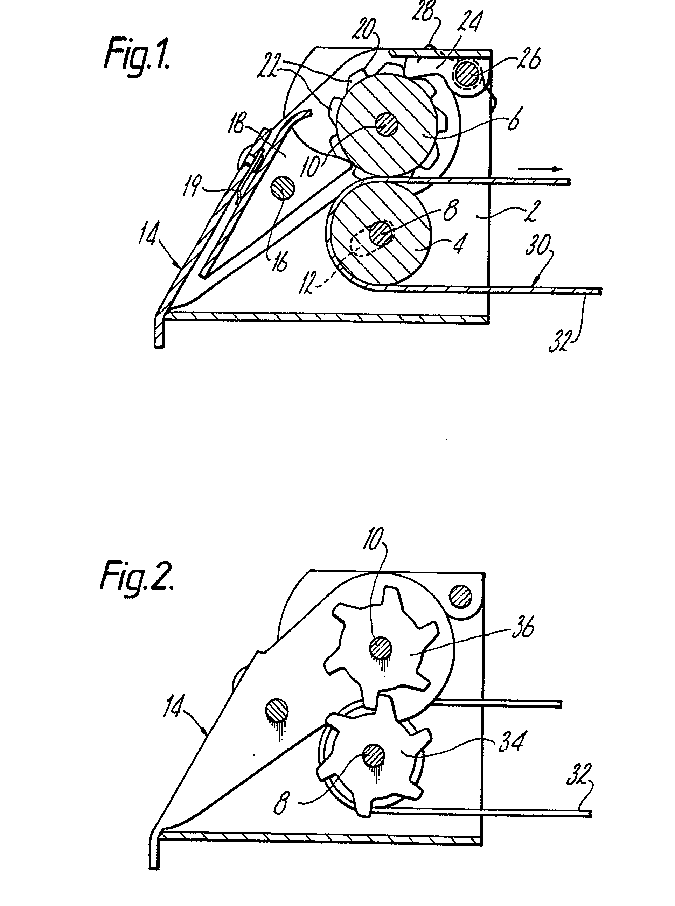

As will appear from Fig. 2, the rollers 4 and 6 are associated with each other by means of the tooth wheels 34 and 36, respectively, which are fixedly connected with the respective roller and thereby cause the rollers to rotate simultaneously in opposite directions.

About the strap roller 4 there passes a strap 30 which preferably is of the kind described in SE-Patent No. 8204961-0, i.e. it consists of an elastomeric material with reinforcing wires of metal embedded therein. The part of the strap designated by reference numeral 32 is meant to extend upwards over a load which is to be secured by means of the strap and the strap tensioning device.

Preferably, the strap tensioning device is intended for fixation to a load carrier for vehicles in order to be used in tensioning the strap 30 when the latter is utilized for retaining various objects, such as surf-boards, canoes, building material etc., to the load carrier.

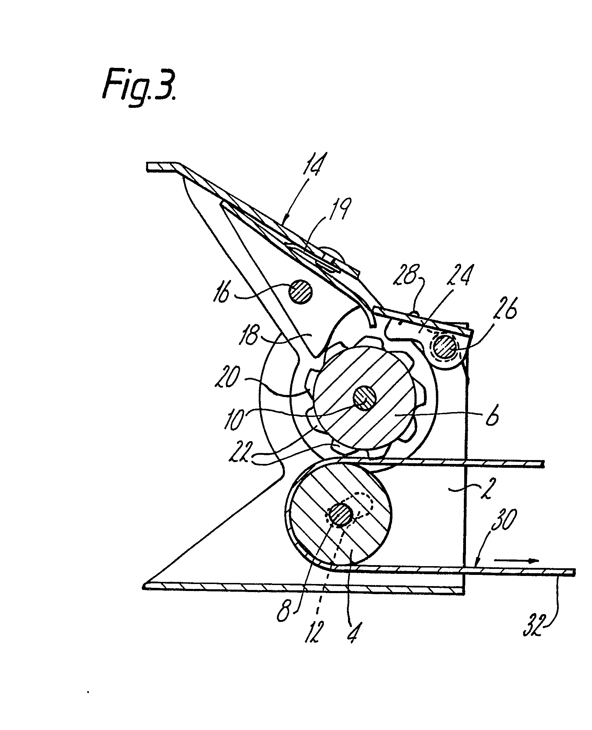

When no strap extends through the strap tensioning device and when a strap extending through said device is in the non-tensioned condition, the strap roller 4 takes the position illustrated in Fig. 3, in which the axis 8 is at the lower left ends of the slots 12 and the strap roller 4 is thus spaced from the clamping roller 6. In this position the end of a strap can be passed about the strap roller 4 and in between the strap roller 4 and the clamping roller 6 to the position illustrated in Fig. 3. In that position the tensioning arm 14 has been rotated clockwise to a position in which the pawl 18 is disengaged from the teeth 22 of the tooth wheel 20 and in which the tensioning arm 14 besides engages the pawl 24 to keep said pawl against the action of the spring 28 thereof out of engagement with the teeth 22 of the tooth wheel 20. In this position the rollers 4 and 6 are thus rotatable to permit an initial tensioning of the strap 30 by a pull at the free end thereof. As a result, the strap roller 4 will be moved because of the strap obliquely upwards to the right against the clamping roller 6 to the position in which the strap 30 is clamped between the strap roller 4 and the clamping roller 6. After that, the tensioning arm 14 can be employed to provide a continued tensioning of the strap 30 by rotation of the clamping roller 6. When the tensioning arm 14 is rotated counter-clockwise from the position illustrated in Fig. 3 the pawl 18 will engage the teeth 22 to rotate the clamping roller 6 counter-clockwise. During this counter-clockwise rotation the pawl 24 will snap over the teeth 22. After the tensioning arm 14 has been swung to the position illustrated in Figs. 1 and 2 the tensioning action can be continued by clockwise rotation of the tensioning arm, the pawl 18 of the tensioning arm 14 snapping over the teeth 22 of the tooth wheel 20; at this movement of the tensioning arm 14 the tooth wheel 20 and thereby the clamping roller 6 are kept latched by the pawl 24. After the tensioning arm has been moved some distance clockwise, tensioning of the clamping roller 6 may be continued in that the tensioning arm 14 is again swung counter-clockwise in the described manner. As the tooth wheels 34 and 36 are meshing, rotation of the clamping roller 6 by means of the tensioning arm 14 will produce a simultaneous rotation of the strap roller 4, which thus results in a reliable clamping of the strap 30 between the rollers and an effective tightening of the strap 30 without any sliding. It should be observed that the strap 30, being of elastomeric material, engages the rollers 4 and 6 under great friction, which contributes to a safe retention of the strap.

For release of the strap 30 the tensioning arm 14 is moved to the position illustrated in Fig. 3, in which the pawl 24 is raised out of engagement with the teeth 22 of the tooth wheel 20. In this position the rollers 4 and 6 can thus rotate in a direction for releasing the strap 30.

The strap tensioning device according to the invention, when used in connection with a load carrier, can be connected with said carrier in such a way that a locking device associated with the load carrier can be utilized to lock the tensioning arm 14 in the position shown in Figs. 1 and 2. As a result, the strap will be blocked in the tensioned state.

The invention may be modified within the scope of the appendant claims.

CLAIMS

1.  A strap tensioning device comprising a rotatably mounted strap roller (4) about which the strap (30) is intended to run over at least part of the periphery of the strap roller, c h a r a c t e r i z e d  in that the device comprises a second rotatably mounted clamping roller (6) against which the strap roller (4) is arranged to be urged for clamping the strap between the rollers, and that at least one of the rollers (4 and 6) is adapted to be blocked against rotation for fixation of the strap.

2.  A strap tensioning device as claimed in claim 1, c h a r a c t e r i z e d in that the strap roller (4) is mounted so as to be movable towards and away from the clamping roller (6) in a direction making an angle with a plane extending through the axes of rotation (8 and 10, respectively) of the rollers and so that a pull at the strap (30) results in said urging of the strap roller (4) against the clamping roller (6).

3.  A strap tensioning device as claimed in claim 1 or 2, c h a r a c t e r i z e d in that a tensioning arm (14) is associated with one of the rollers (4 and 6) to rotate said roller for tensioning of the strap (30).

4.  A strap tensioning device as claimed in claim 3, c h a r a c t e r i z e d in that a latching device (24) is associated with one of the rollers (4 and 6) and that the latching device (24) is releaseable by means of the tensioning arm (14).

5.  A strap tensioning device as claimed in any of the preceding claims, c h a r a c. t e r i z e d  in that the rollers (4 and 6) are interconnected by means of gear or tooth wheels (34 and 36) which are in meshing engagement.

Fig.1.

Fig.2.

*Fig.3.*

**0104155**

European Patent
Office

**EUROPEAN SEARCH REPORT**

Application number

EP 83 85 0236

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | WO-A-8 201 351 (LIDNBLAD)<br>* Claims 1,9; figures 1,2,13 * | 1-5 | B 60 P 7/08 |
| X | DE-A-2 914 888 (OSTERTAG-WERKE)<br>* Claims 1,3,5,10,11; figures 1,2 * | 1-5 | |
| A | GB-A-2 016 625 (TAYLOR)<br>* Claims 1,10; figure 5 * | 1,4 | |

TECHNICAL FIELDS
SEARCHED (Int. Cl. ³)

B 60 P 7/08
B 60 R 9/04

The present search report has been drawn up for all claims

| Place of search<br>THE HAGUE | Date of completion of the search<br>05-12-1983 | Examiner<br>OSBORNE J. |
|---|---|---|

EPO Form 1503. 03 82